# EUROPEAN PATENT SPECIFICATION

(11) **EP 0 495 587 B1**
(45) Date of publication and mention of the grant of the patent: **15.11.1995**
(21) Application number: 92300202.6
(22) Date of filing: 09.01.1992
(51) Int. Cl.: F02C 7/22, F16L 59/14

(54) **Gas turbine engine fuel manifold**
Verteilerleitung für den Brennstoff einer Gasturbine
Rampe de distribution de carburant pour turbine à gaz

(30) Priority: 18.01.1991 US 642780
(43) Date of publication of application: 22.07.1992
(73) Proprietor: GENERAL ELECTRIC COMPANY, Schenectady, NY 12345 (US)
(72) Inventor: McLean, Thomas, Loveland, Ohio 45140 (US); Cook, George Edward, Cincinnati, Ohio 45213 (US)
(74) Representative: Szary, Anne Catherine, Dr.

(56) References cited:
- CH-A- 666 340
- FR-A- 1 186 524
- FR-A- 1 380 744
- FR-A- 2 336 556
- FR-A- 2 504 195
- US-A- 3 516 252

## Description

### Technical Field

The present invention relates generally to gas turbine engines, and, more specifically, to fuel manifolds for providing fuel to a combustor thereof.

### Background Art

Conventional gas turbine engines include an annular combustor having a plurality of circumferentially spaced carburetors disposed in an annular dome at an upstream end thereof. The combustor is disposed radially inside an annular casing and is provided with hot compressor discharge air which, depending on particular engine designs, may be from about 1,000°F (538°C) to about 1,400°F (760°C). To channel fuel to the carburetors within the annular casing, conventional fuel stems extend to the carburetors from an annular manifold surrounding the casing. The fuel stems are exposed to the hot compressor discharge air and must be suitably constructed for channeling the fuel without adverse effect.

For example, conventional fuel manifolds and the fuel stems are made from stainless steel or Hastolly X to provide adequate strength for withstanding the fuel pressure therein. These metals are also preferred since they do not react chemically with the fuel at the relatively high temperatures in the environment of the combustor. Although these metals have these advantages, they also have the disadvantage of having relatively high thermal conductivity which allows heat to be transferred to the fuel flowing in the manifold and fuel stems, which will raise the temperature of the fuel unless suitable means are provided for protecting the fuel.

The fuel stems exposed to the compressor discharge air are typically designed to be cooled, for example by the fuel itself or by insulating air gaps, to ensure that the temperature of the fuel being channeled therethrough does not reach unacceptably high temperatures which would cause undesirable coking of the fuel inside the fuel channels. It is desirable to maintain the internal wetted wall temperature of the fuel tubes or conduits less than about 350°F (177°C) for preventing coking of the fuel therein.

In order to meet this requirement, conventional fuel manifolds are mounted outside the casing surrounding the combustor wherein the environment is substantially cooler than that inside the casing wherein the compressor discharge air flows. Since conventional fuel manifolds typically extend about 360° around the engine centerline and the casing surrounding the combustor, they are relatively large diameter structures and therefore increase the weight and envelope of the engine. Although the fuel stems connecting the manifold to the fuel injectors in the carburetors extend through the casing to the combustor in the environment of the hot compressor discharge air, they typically have relatively small diameters and are relatively short, and therefore may be more effectively cooled by the fuel channeled therein, or by insulating air gaps therein.

US-A-3,516,252 discloses a gas turbine engine having a fuel manifold with cooperating fuel nozzles. A nozzle shield is provided for each nozzle to protect the nozzle from combustion chamber heat. However, it has been found with the temperatures existing in modern day gas turbine engines, such method of heat shielding is no longer adequate.

### Summary of the Invention

In accordance with the invention, a fuel manifold is provided as defined in independent Claim 1. Preferred embodiments of the invention are defined in dependent Claims 2 to 10.

### Brief Description of Drawings

The novel features believed characteristic of the invention are set forth and differentiated in the claims. The invention, in accordance with a preferred and exemplary embodiment, together with further objects and advantages thereof, is more particularly described in the following detailed description taken in conjunction with the accompanying drawing in which:
Figure 1 is a longitudinal sectional view of a schematic high bypass turbofan engine including a fuel manifold in accordance with one embodiment of the present invention.
Figure 2 is an enlarged longitudinal sectional view of the combustor region of the engine shown in Figure 1 illustrating the fuel manifold in accordance with one embodiment of the present invention.
Figure 3 is an axial, partly sectional view of the combustor and fuel manifold illustrated in Figure 2 taken along line 3-3.
Figure 4 is an enlarged, axial sectional view of a portion of one of the fuel manifold tubes illustrated in Figure 3.
Figure 5 is a transverse sectional view of the manifold tube illustrated in Figure 4 taken along line 5-5.
Figure 6 is a perspective view of a portion of the fuel manifold tube illustrated in Figure 4.

### Mode(s) For Carrying Out the Invention

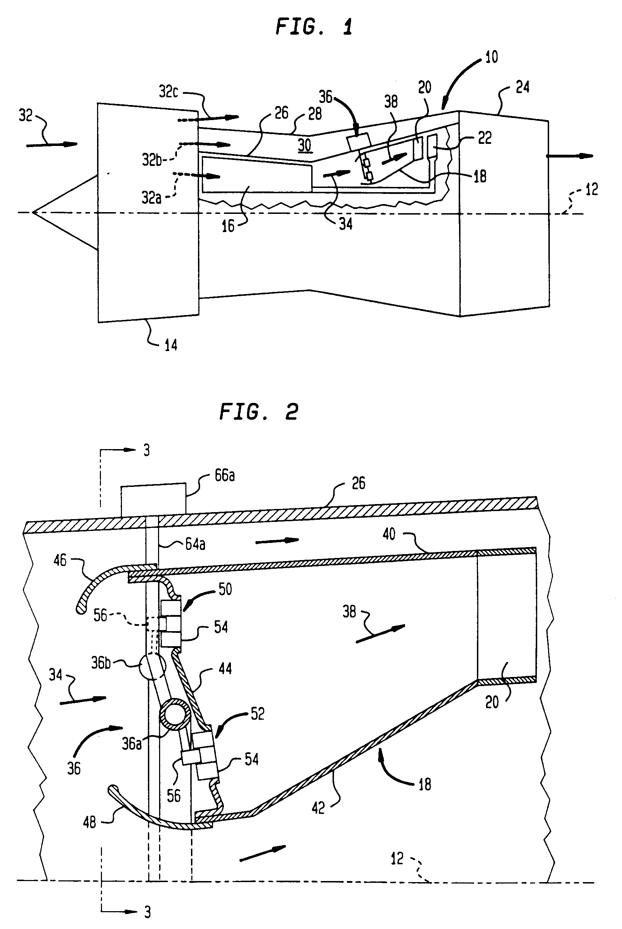

Illustrated in Figure 1 is a schematic representation of an exemplary high bypass turbofan engine 10. The engine 10 includes a longitudinal centerline axis 12 around which are coaxially disposed in serial flow communication a conventional fan 14, a conventional compressor 16, a conventional combustor 18, a conventional high pressure turbine nozzle 20, a conventional high pressure turbine 22 suitably joined by a shaft to the compressor 16, and a conventional low pressure turbine 24 which conventionally drives the fan 14 through a shaft.

The compressor 16 and the combustor 18 are disposed radially inside an annular casing 26, and in this exemplary embodiment of the engine 10, an annular outer casing 28 surrounds the casing 26 to define an annular bypass duct 30. In conventional operation, ambient air 32 is channeled through the fan 14, a first portion 32a of which is channeled into the compressor 16, a second portion 32b is channeled through the bypass duct 30, and a third portion 32c is discharged from the fan 14 over the outer casing 28 for providing thrust for powering an aircraft (not shown) in flight. The air first portion 32a is compressed in the compressor 16 and forms relatively hot compressor discharge air 34 which is channeled to the combustor 18. A fuel manifold 36 in accordance with one embodiment of the present invention provides fuel to the combustor 18 which is mixed with a portion of the compressor discharge air 34 and conventionally ignited for generating combustion discharge gases 38 which flow through the nozzle 20, and turbines 22 and 24 for powering the fan 14 and the compressor 16.

Illustrated in more particularity in Figure 2 is an enlarged view of the region of the combustor 18 including the fuel manifold 36 of the present invention. The combustor 18 conventionally includes an annular, radially outer liner 40 and an annular, radially inner liner 42 spaced therefrom which are conventionally joined at upstream ends thereof to a conventional annular dome 44. Conventional outer and inner cowls 46 and 48 extend upstream from the dome 44 for conventionally channeling a portion of the compressor discharge air 34 to the dome 44 and portions over the outer surfaces of the liners 40 and 42.

In this exemplary embodiment of the combustor 18, the dome 44 is a double dome having a plurality of circumferentially spaced outer carburetors 50 and a plurality of circumferentially spaced inner carburetors 52. Each of the carburetors 50 and 52 includes a conventional air swirler 54 and a conventional fuel injector 56. Fuel is conventionally discharged from the fuel injector 56 and mixed with a portion of the compressor discharge air 34 in the swirler 54 for creating fuel/air mixtures which are conventionally ignited for forming the combustion gases 38.

In this exemplary embodiment of the present invention, the fuel manifold 36 includes a radially inner manifold 36a providing fuel to the inner carburetors 52, and a radially outer manifold 36b providing fuel to the outer carburetors 50. The inner and outer manifolds 36a and 36b are substantially identical to each other except in size and orientation and the following detailed description of the inner manifold 36a applies equally as well to the outer manifold 36b wherein certain like elements are identified by the suffix "b" added to the corresponding element numeral designation. Of course, the invention may also be practiced for a conventional single dome combustor having solely one row of circumferentially spaced carburetors.

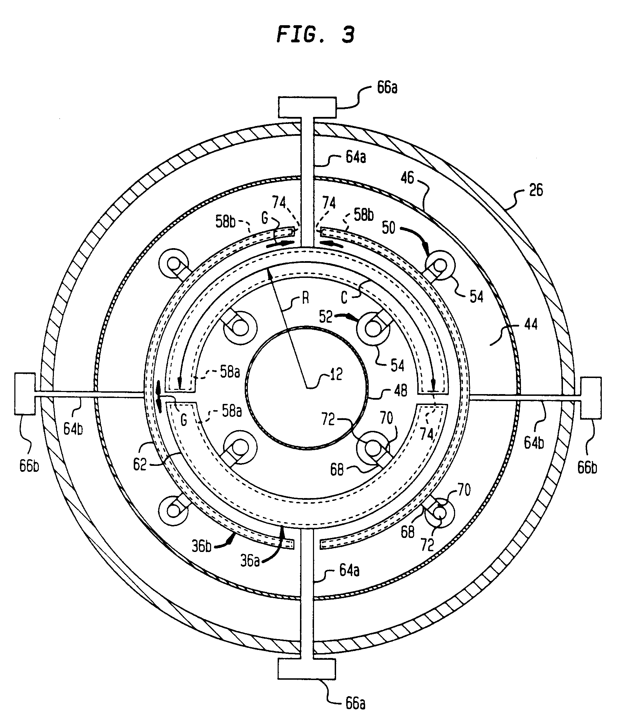

Figure 3 illustrates an axial, aft facing view of the fuel manifolds 36a, 36b and the combustor 18. Only four outer and inner carburetors 50 and 52 are shown for clarity, it being understood that the number of circumferentially spaced carburetors is conventionally determined for each particular engine application. The fuel manifold 36a includes at least one, and in this exemplary embodiment two, arcuate inner manifold tubes 58a. The tubes 58a in the preferred embodiment are formed of conventional stainless steel such as 321 stainless steel having the designation AMS 5557, for enjoying the conventional advantages thereof.

In accordance with one feature of the present invention, the manifold tubes 58a are preferably disposed radially inside the casing 26 surrounding the combustor 18 for reducing their size, and therefore engine weight and engine envelope. For example, the two manifold tubes 58a are preferably disposed coaxially with each other at a common radius around the engine centerline axis 12 and together extend circumferentially about 360° for forming a ring. Also in the preferred embodiment, each of the manifold tubes 58a extends circumferentially about 180°. The manifold tubes 58a, as more particularly illustrated in Figure 2, are also preferably disposed upstream of the dome 44 and radially between the outer and inner liners 40 and 42, and radially between the outer and inner cowls 46 and 48. In this way, the manifold tubes 58a are located relatively close to the carburetors 52, and thusly reduce the size of the fuel manifold 36a for reducing engine weight and envelope.

However, since the manifold 36a is disposed inside the casing 26 and upstream of the dome 44 it is subject to the high temperature compressor discharge air 34 which would lead to unacceptable coking of the fuel therein but for the provisions of the present invention.

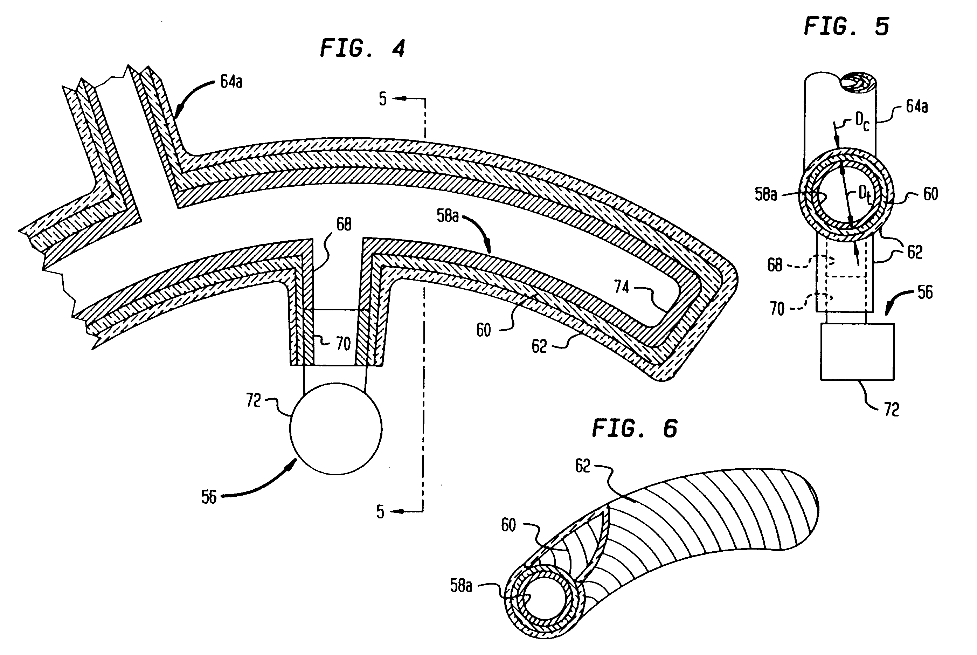

More specifically, and in accordance with the present invention, a thermal insulation layer 60 as shown in more particularity in Figures 4 and 5 preferably completely surrounds the manifold tube 58a for providing thermal protection thereof. The thermal insulation layer 60 preferably has a thermal conductivity which is as low as possible. In one embodiment of the invention, commercially available "MIN-K" (trademark) brand insulation material manufactured by Johns Manville may be used and has a thermal conductivity of about 0.30 BTU-In/Sq. Ft.-Hr-°F (0.04327 W/M-°C). Since effective thermal insulation layers, such as layer 60, are typically non-structural layers, the fuel manifold 36a preferably also includes a cover layer 62 completely surrounding the insulation layer 60 which is substantially rigid, for example, for protecting the insulation layer 60 from physical damage. In the preferred embodiment of the present invention, the cover layer 62 is also preferably impervious to the fuel so that any leaks of fuel from the manifold tube 58a are contained by the cover layer 62. The cover layer 62 in accordance with one embodiment of the present invention is preferably a composite prepreg such as a ceramic matrix composite in the form of tape or cloth which provides additional thermal insulation of the tube 58a and the fuel flowable therein.

As illustrated in Figure 6, both the insulation layer 60 and the cover layer 62 are preferably in the form of tapes which are conventionally wound around the manifold tube 58a. The cover layer 62 is conventionally impregnated with a conventional hardening agent and baked at a suitably high temperature in a conventional manner for curing the cover layer 62 for forming a relatively hard cover layer 62 for protecting the insulation layer 60.

Referring again to Figures 2 and 3, since the manifold tubes 58a and 58b are preferably mounted inside the casing 26, respective fuel inlet conduits 64a, 64b extend from outside the casing 26, through the casing 26, and are conventionally joined in flow communication with the manifold tubes 58a, 58b, respectively, for providing fuel thereto. The inlet conduits 64a are conventionally joined to a conventional first fuel supply 66a conventionally mounted outside the casing 26, and the fuel inlet conduits 64b are similarly conventionally joined to conventional second fuel supplies 66b also conventionally disposed outside of the casing 26.

As illustrated in Figures 3 and 5, each of the fuel manifolds 36a, 36b has its own respective dimensions. For example, the radially inner manifold tube 58a has a nominal radius R measured from the engine centerline 12, a circumferential length C, and an outside diameter Dₜ. Of course, the cover layer 62 has similar dimensions including, for example, an outer diameter D_{c}, which is greater than Dₜ.

It is conventionally known that thermal expansion and contraction of a material is equal to the product of a linear dimension of that material, such as R, C, and Dₜ; the conventional thermal coefficient of expansion; and the differential temperature experienced by the material. Since the cover layer 62 is preferably substantially rigid in the preferred embodiment of the present invention, and is formed from a different material than that of the manifold tube 58a, thermally induced differential movement of these two members during operation of the combustor 18 may damage the cover layer 62, which in the preferred embodiment of the present invention is ceramic.

Accordingly, in order to reduce or eliminate the differential thermal movement between the manifold tube 58a and the rigid cover layer 62, the cover layer 62 preferably has a thermal coefficient of expansion which is preselected so that the product of a linear dimension of the cover layer 62, its thermal coefficient of expansion, and the expected differential temperature during operation of the combustor 18 matches or substantially matches the product of a respective linear dimension of the manifold tube 58a, its thermal coefficient of expansion, and its expected differential temperature during operation of the combustor 18. Since the fuel channeled through the manifold tube 58a is relatively cool, and since the compressor discharge air 34 channeled over the cover layer 62 is relatively hot, the differential temperatures experienced by the manifold tube 58a will be less than the differential temperature experienced by the cover layer 62 during operation. Accordingly, the cover layer 62 preferably has a thermal coefficient of expansion less than the thermal coefficient of expansion of the manifold tube 58a for reducing the thermal differential movement between the manifold tube 58a and the cover layer 62.

For example, since the radius R of the manifold tube 58a is equal to the corresponding radius of the cover layer 62, then the two operative parameters for obtaining differential thermal movement therebetween are the thermal coefficients of expansion and the differential temperatures. Accordingly, the coefficients of expansion of the tube 58a and the cover layer 62 are preselected so that the product of the tube thermal coefficient of expansion and the tube differential temperature is substantially equal to the product of the thermal coefficient of expansion of the cover layer 62 and the cover layer differential temperature. In this way, differential radial movement between the tube 58a and the cover layer 62 is reduced or eliminated for thusly protecting the cover layer 62. Such differential radial movement is more significant in an embodiment of the invention having a completely annular, single manifold tube 58a. However, by using discrete and unconnected manifold tube serpents such as the two serpents 58a, differential radial movement is substantially reduced.

Similarly, differential thermal movement between the tube 58a and cover layer 62 also occurs along the circumferential length C as illustrated in Figure 3 and, with the linear dimension C being substituted for the linear dimension R, the preferred coefficients of expansion as above described also reduce or eliminate differential thermal movement along the circumferential direction. And, thermal differential movement is also reduced or eliminated in the radial direction through a cross section of the tube 58a and the cover layer 62 for the linear dimensions Dₜ and D_{c} as illustrated in Figure 5.

As illustrated in Figures 4 and 5, the manifold tube 58a includes a plurality of relatively short manifold stems 68 to which the fuel injector 56 is conventionally joined. For example, the fuel injector 56 includes a relatively short injector stem 70 suitably joined to the manifold stem 68, by brazing for example, and an injector tip 72 suitably joined to the stem 70, also by brazing for example. Referring also to Figure 3, the manifold stems 68 of the inner manifold tubes 58a extend radially inwardly, and the manifold stems 68 of the outer manifold tubes 58b extend radially outwardly. In the preferred emhodiment of the present invention, the thermal insulation layer 60 and the cover layer 62 are disposed also on the manifold and fuel injector stems 68 and 70, as well as on the fuel inlet conduits 64a and 64b. In the preferred embodiment of the present invention, the thermal insulation layer 60 and the ceramic cover layer 62 are preselected for having suitably low thermal conductivity and suitable number of layers for providing thermal insulation of the manifold tube 58a for maintaining an internal wetted wall temperature of the tube below about 350°F (177°C) to prevent coking of the fuel therein, even though the manifold 36a is subject to the hot compressor discharge air 34 which may be at least 1000°F (538°C).

As illustrated in Figures 3 and 4, each of the manifold tubes 58a, 58b also includes an end cap 74 at each circumferential end thereof, around which both the thermal insulation layer 60 and the cover layer 62 are also provided. Adjacent end caps 74 of adjacent manifold tubes 58a, and 58b, respectively, form gaps G therebetween. Although a fully annular, 360° manifold tube 58a or 58b could be used in other embodiments of the present invention, it is preferred that the manifold tubes are provided in arcuate, segmented portions which, for example, reduces the differential thermal movement between the manifold tubes and the cover layer 62 in the radial direction relative to the engine centerline axis 12 as described above.

Also as illustrated in Figure 3, wherein the double annular dome 44 is used, the two radially inner manifold tubes 58a and respective gaps G are disposed or oriented, relative to the centerline axis 12, about 90° relative to the orientation or position of the two radially outer manifold tubes 58b and respective gaps G so that the fuel inlet conduits 64a of the inner manifold 36a pass between the gaps G formed between adjacent ones of the outer manifold tubes 58b and extend to the casing 26. This provides for a more compact arrangement of the inner and outer manifolds 36a and 36b which allows the fuel inlet conduits 64a of the inner manifold tubes 58a to pass between the outer manifold tubes 58b to reach the first fuel supply 66 outside of the casing 26.

Furthermore, as illustrated additionally in Figure 2, the two manifolds 36a and 36b are preferably positioned near the center of the dome 44 radially between the outer and inner carburetors 50 and 52 for further increasing the compactness thereof, and therefore reducing the fuel flow distance between the manifolds 36a, 36b and the corresponding fuel injectors 56.

While there has been described herein what is considered to be a preferred embodiment of the present invention, other modifications of the invention shall be apparent to those skilled in the art from the teachings herein, and it is, therefore, desired to be secured in the appended claims all such modifications as fall within the true scope of the invention, as defined in the appended Claims

## Claims

1. A fuel manifold for a gas turbine engine (10) having a combustor (18) said fuel manifold (36) for providing fuel to said combustor (18) disposed radially inside a casing (26), said fuel manifold comprising an arcuate manifold tube (58) subject to high temperature compressor discharge air (34) during operation of said combustor; a thermal insulation layer (60) disposed on and completely surrounding said tube (58); and, a cover layer (62) disposed on and completely surrounding said insulation layer (60) and being substantially rigid for protecting said insulation layer (60) from physical damage wherein said tube (58) has a thermal coefficient of expansion and said cover layer (62) has a coefficient of expansion less than tube (58) thermal coefficient of expansion.

2. The fuel manifold according to claim 1, wherein said tube (58) is subject to a differential temperature and said tube (36) and cover layer (62) coefficients of expansion are preselected so that the product of said tube thermal coefficient of expansion and said tube differential temperature is substantially equal to the product of said cover layer thermal coefficient of expansion and said cover layer differential temperature.

3. The fuel manifold according to claim 1 wherein said cover layer is a ceramic matrix composite.

4. The fuel manifold according to claim 1 wherein said tube (58) includes a plurality of manifold stems (68) extending radially therefrom and in flow communication therewith for channelling fuel from said manifold tube (58) to a respective plurality of fuel injectors (56) joined to said manifold stems (68), and thermal insulation layer and said cover layer are also disposed on said manifold stems.

5. The fuel manifold according to claim 1 wherein both said thermal insulation layer (60) and said cover layer (62) have preselected thermal conductivities for providing thermal insulation of said tube for maintaining an internal wetted wall temperature of said tube below about 350°F (177°C).

6. The fuel manifold according to claim 1 wherein said manifold (36) comprises two of said arcuate manifold tubes (58a,58b) disposed coaxially with each other and together extending circumferentially about 360°.

7. The fuel manifold according to claim 6 wherein each of said manifold tubes (58a,58b) extends circumferentially about 180°.

8. The fuel manifold according to claim 7 wherein said manifold tubes (58a,58b) are disposed radially inside said casing (26) and further including respective fuel inlet conduits (64a,64b) extending from outside and through said casing (26) and joined in flow communication with said manifold tubes (58a,58b) for providing fuel thereto.

9. The fuel manifold according to claim 8 further including two of said manifolds (36a,36b) in the form of a radially inner manifold (36a) and a radially outer manifold (36b), with said two arcuate manifold tubes (58a) of respective ones thereof being disposed about 90° relative to the other two arcuate manifold tubes (58b) so that fuel inlet conduits (64a) of said inner manifold (36a) pass between gaps (G) formed between adjacent ones of said outer manifold tubes (36b) and extend to said casing (26).

10. The fuel manifold according to claim 9 wherein said combustor (18) includes radially outer and inner liners (40,42) joined at upstream ends to an annular dome (44), and said manifold tubes (58a,58b) are disposed upstream of said dome (44) and radially between said outer and inner liners (40,42).

## Patentansprüche

1. Brennstoffverteiler für ein Gasturbinentriebwerk (10) mit einer Brennkammer (18), wobei der Brennstoffverteiler (36) Brennstoff an die Brennkammer (18) liefert, die radial innerhalb eines Gehäuses (26) angeordnet ist, wobei der Brennstoffverteiler ein bogenförmiges Verteilerrohr (58) aufweist, das während des Betriebs der Brennkammer Verdichterausgangsluft (34) mit hoher Temperatur ausgesetzt ist; mit einer thermischen Isolationsschicht (60), die auf dem Rohr (58) und dieses vollständig umgebend angeordnet ist; und einer Deckschicht (62), die auf der Isolationsschicht (60) und diese vollständig umgebend angeordnet ist und die im wesentlichen fest ist zum Schützen der Isolationsschicht (60) vor physikalischer Beschädigung, wobei das Rohr (58) einen thermischen Ausdehnungskoeffizienten hat und die Deckschicht (62) einen Ausdehnungskoeffizienten hat, der kleiner als der thermische Ausdehnungskoeffizient des Rohres (58) ist.

2. Brennstoffverteiler nach Anspruch 1, wobei das Rohr (58) einer Temperaturdifferenz ausgesetzt ist und das Rohr (36) und die Deckschicht (62) so vorgewählt sind, daß das Produkt des thermischen Ausdehnungskoeffizienten des Rohres und der Temperaturdifferenz des Rohres im wesentlichen gleich dem Produkt des thermischen Ausdehnungskoeffizienten der Deckschicht und der Temperaturdifferenz der Deckschicht ist.

3. Brennstoffverteiler nach Anspruch 1, wobei die Deckschicht eine keramische Matrixzusammensetzung ist.

4. Brennstoffverteiler nach Anspruch 1, wobei das Rohr (58) mehrere Verteilerfüße (68) aufweist, die radial davon ausgehen und damit in Strömungsverbindung stehen zum Leiten von Brennstoff von dem Verteilerrohr (58) zu einer entsprechenden Anzahl von Brennstoffinjektoren (56), die mit den Verteilerfüßen (68) verbunden sind, und die thermische Isolationsschicht und die Deckschicht auch auf den Verteilerfüßen angeordnet sind.

5. Brennstoffverteiler nach Anspruch 1, wobei sowohl die thermische Isolationsschicht (60) als auch die Deckschicht (62) vorgewählte thermische Leitfähigkeiten haben zur Ausbildung einer thermischen Isolation des Rohres, um eine interne benetzte Wandtemperatur des Rohres unter etwa 177°C (350°F) zu halten.

6. Brennstoffverteiler nach Anspruch 1, wobei der Verteiler (36) zwei bogenförmige Verteilerrohre (58a, 58b) aufweist, die koaxial zueinander angeordnet sind und sich gemeinsam in Umfangsrichtung über etwa 360° erstrecken.

7. Brennstoffverteiler nach Anspruch 6, wobei jedes der Verteilerrohre (58a, 58b) sich in Umfangsrichtung über etwa 180° erstreckt.

8. Brennstoffverteiler nach Anspruch 7, wobei die Verteilerrohre (58a, 58b) radial innerhalb des Gehäuses (26) angeordnet sind und ferner entsprechende Brennstoffeinlaßleitungen (64a, 64b) aufweisen, die von außen kommen und sich durch das Gehäuse (26) erstrecken und in Strömungsverbindung mit den Verteilerrohren (58a, 58b) verbunden sind zum Zuführen von Brennstoff.

9. Brennstoffverteiler nach Anspruch 8, wobei ferner zwei der Verteiler (36a, 36b) in der Form von einem radial inneren Verteiler (36a) und einem radial äußeren Verteiler (36b) vorgesehen sind, wobei die zwei bogenförmigen Verteilerrohre (58a) von entsprechenden Verteilern etwa 90° relativ zu den zwei anderen bogenförmigen Verteilerrohren (58b) angeordnet sind, so daß Brennstoffeinlaßleitungen (64a) des inneren Verteilers (36a) zwischen Spalten (G) hindurchführen, die zwischen benachbarten äußeren Verteilerrohren (36b) gebildet sind, und zu dem Gehäuse (26) führen.

10. Brennstoffverteiler nach Anspruch 9, wobei die Brennkammer (18) radial äußere und innere Auskleidungen (40, 42) aufweist, die an stromaufwärtigen Enden mit einem ringförmigen Dom (54) verbunden sind, und die Verteilerrohre (58a, 58b) stromaufwärts von dem Dom (44) und radial zwischen den äußeren und inneren Auskleidungen (40, 42) angeordnet sind.

## Revendications

1. Rampe de distribution de carburant pour un turbomoteur (10) comprenant une chambre de combustion (18) et ladite rampe de distribution (36) pour fournir du carburant à ladite chambre de combustion (18) placée de façon radiale à l'intérieur d'un carter (26), ladite rampe de distribution de carburant comprenant un tube courbe de distribution (58), soumis pendant le fonctionnement de ladite chambre de combustion à l'air (34) de sortie du compresseur se trouvant à une température élevée, une couche (60) d'isolation thermique placée sur ledit tube (58) en l'entourant complètement et une couche de couverture (62) qui est placée sur ladite couche d'isolation (60) en l'entourant complètement et qui est sensiblement rigide afin de protéger ladite couche d'isolation (60) des endommagements mécaniques,
dans laquelle ledit tube (58) a un certain coefficient de dilatation thermique et ladite couche de couverture (62) a un coefficient de dilatation thermique inférieur au coefficient de dilatation thermique du tube (58).

2. Rampe de distribution de carburant selon la revendication 1, dans laquelle ledit tube (58) est soumis à une température différentielle et les coefficients de dilatation thermique dudit tube (36) et de ladite couche de couverture (62) sont choisis au préalable pour que le produit du coefficient de dilatation thermique dudit tube par ladite température différentielle du tube soit sensiblement égal au produit du coefficient de dilatation thermique de ladite couche de couverture par ladite température différentielle de ladite couche de couverture.

3. Rampe de distribution de carburant selon la revendication 1, dans laquelle ladite couche de couverture est un composite à matrice céramique.

4. Rampe de distribution de carburant selon la revendication 1, dans laquelle ledit tube (58) comprend une pluralité de tiges de distribution (68) qui en partent radialement et sont en communication d'écoulement avec lui pour canaliser du carburant dudit tube de distribution (58) à une pluralité correspondante d'injecteurs de carburant (56) fixés auxdites tiges de distribution (68), une couche d'isolation thermique et ladite couche de couverture étant également présentes sur lesdites tiges de distribution.

5. Rampe de distribution de carburant selon la revendication 1, dans laquelle ladite couche (60) d'isolation thermique et ladite couche de couverture (62) ont toutes deux des conductivités thermiques choisies au préalable pour assurer une isolation thermique dudit tube et maintenir la température interne de parois humides dudit tube en-dessous de 350 °F environ (177°C).

6. Rampe de distribution de carburant selon la revendication 1, dans laquelle ladite rampe (36) comprend deux tubes de distribution (58a, 58b), courbes, disposés coaxialement l'un par rapport à l'autre et s'étendant ensemble de façon circonférentielle sur 360°.

7. Rampe de distribution de carburant selon la revendication 6, dans laquelle chacun des tubes de distribution (58a, 58b) s'étend de façon circonférentielle sur 180°.

8. Rampe de distribution de carburant selon la revendication 7, dans laquelle lesdits tubes de distribution (58a, 58b) sont disposés de façon radiale à l'intérieur dudit carter (26) et comportant en outre des conduits respectifs (64a, 64b) d'admission de carburant qui viennent de l'extérieur, traversent ledit carter (26) et sont réunis en communication d'écoulement avec lesdits tubes de distribution (58a, 58b) pour leur fournir du carburant.

9. Rampe de distribution de carburant selon la revendication 8, comprenant en outre deux rampes de distribution (36a, 36b) ayant la forme d'une rampe radialement interne (36a) et d'une rampe radialement externe (36b), lesdits deux tubes courbes de distribution (58a) de ces rampes respectives étant disposés à environ 90° par rapport aux deux autres tubes courbes de distribution (58b) de sorte que lesdits conduits (64a) d'admission de carburant de ladite rampe interne (36a) traversent des intervalles (G) formés entre les tubes adjacents de rampe externe (36b) et s'étendent jusqu'au carter (26).

10. Rampe de distribution de carburant selon la revendication 9, dans laquelle ladite chambre de combustion (18) comprend des doublures radialement extérieure et intérieure (40, 42) réunies en leur extrémité amont à un dôme annulaire (44) et lesdits tubes de distribution (58a, 58b) sont disposés en amont dudit dôme (44) et de façon radiale entre lesdites doublures extérieure et intérieure (40, 42).
